(19) Europäisches Patentamt / European Patent Office / Office européen des brevets

(11) **EP 3 647 738 B1**

(12) **FASCICULE DE BREVET EUROPEEN**

(45) Date de publication et mention de la délivrance du brevet:
**27.04.2022 Bulletin 2022/17**

(21) Numéro de dépôt: **19205247.0**

(22) Date de dépôt: **25.10.2019**

(51) Classification Internationale des Brevets (IPC):
*G01P 15/097* $^{(2006.01)}$   *G02B 6/12* $^{(2006.01)}$
*G01D 5/353* $^{(2006.01)}$   *B82Y 20/00* $^{(2011.01)}$
*B82Y 10/00* $^{(2011.01)}$   *G01P 1/00* $^{(2006.01)}$
*G01C 19/58* $^{(2006.01)}$   *G01D 5/28* $^{(2006.01)}$
*G01P 15/093* $^{(2006.01)}$

(52) Classification Coopérative des Brevets (CPC):
**G01D 5/35338; G01C 19/58; G01D 5/28; G01P 15/093; G01P 15/097;** B82Y 20/00; G02B 6/12002; G02B 6/12007; G02B 2006/12138

(54) **RÉSONATEUR OPTO-MÉCANIQUE À GUIDE D'ONDE SUB-LONGUEUR D'ONDE**

OPTOMECHANISCHER RESONATOR MIT WELLENLEITER MIT SUBWELLENLÄNGE

OPTO-MECHANICAL RESONATOR WITH A WAVE SUB-LENGTH WAVEGUIDE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.10.2018 FR 1859905**

(43) Date de publication de la demande:
**06.05.2020 Bulletin 2020/19**

(73) Titulaire: **Commissariat à l'énergie atomique et aux énergies alternatives 75015 Paris (FR)**

(72) Inventeurs:
• **TAUREL, Boris**
  **38054 GRENOBLE CEDEX 09 (FR)**
• **DURAFFOURG, Laurent**
  **38054 GRENOBLE CEDEX 09 (FR)**
• **LABEYE, Pierre**
  **38054 GRENOBLE CEDEX 09 (FR)**

(74) Mandataire: **Brevalex**
  **56, Boulevard de l'Embouchure**
  **B.P. 27519**
  **31075 Toulouse Cedex 2 (FR)**

(56) Documents cités:
**US-B1- 10 031 158**

• **NATHAN C LINDQUIST ET AL: "Periodic Modulation of Extraordinary Optical Transmission through Subwavelength Hole Arrays using Surrounding Bragg Mirrors", ARXIV.ORG, CORNELL UNIVERSITY LIBRARY, 201 OLIN LIBRARY CORNELL UNIVERSITY ITHACA, NY 14853, 9 août 2007 (2007-08-09), XP080297900, DOI: 10.1103/PHYSREVB.76.155109**
• **JASPER CHAN ET AL: "Laser cooling of a nanomechanical oscillator into its quantum ground state", ARXIV.ORG, CORNELL UNIVERSITY LIBRARY, 201 OLIN LIBRARY CORNELL UNIVERSITY ITHACA, NY 14853, 18 juin 2011 (2011-06-18), XP080509973, DOI: 10.1038/NATURE10461**
• **A.H. SAFAVI-NAEINI ET AL.: "Observation of quantum Motion of a Nanomechanical Resonator", PHYSICAL REVIEW LETTERS, vol. 108, 17 janvier 2012 (2012-01-17), XP002792738,**
• **DONG B ET AL: "An on-chip opto-mechanical accelerometer", MICRO ELECTRO MECHANICAL SYSTEMS (MEMS), 2013 IEEE 26TH INTERNATIONAL CONFERENCE ON, IEEE, 20 janvier 2013 (2013-01-20), pages 641-644, XP032339318, DOI: 10.1109/MEMSYS.2013.6474323 ISBN: 978-1-4673-5654-1**

**Description**

**DOMAINE TECHNIQUE**

L'invention se rapporte au domaine des résonateurs opto-mécaniques, dans lesquels la mise en mouvement d'un élément mécanique du résonateur influence un signal optique confiné dans le même résonateur. L'observation du signal optique en sortie du résonateur donne une information sur le mouvement mécanique dans le résonateur, et ainsi sur le phénomène à l'origine de ce mouvement.

**ÉTAT DE LA TECHNIQUE ANTÉRIEURE**

On connaît dans l'art antérieur différents types de résonateurs opto-mécaniques.

Un tel résonateur est par exemple réalisé en espace libre, constitué d'une cavité optiquement résonante de type Fabry-Perot dans laquelle l'un des miroirs est libre de se déplacer. Le déplacement du miroir mobile modifie la longueur de la cavité, et donc les longueurs d'onde de résonance de cette dernière. L'observation d'un signal optique émergeant de la cavité permet d'obtenir une information relative à la longueur d'onde de résonance de la cavité, laquelle dépend de la position du miroir mobile.

Un tel résonateur reste cependant trop sensible aux conditions expérimentales pour permettre une exploitation en dehors du cadre de la recherche.

Pour pallier à cet inconvénient, on a développé des résonateurs opto-mécaniques miniaturisés, intégrés sur puce. Il s'agit de micro-résonateurs dits « en anneau », dans lesquels le signal optique est guidé selon un trajet optique en anneau. Le micro-résonateur est agencé suspendu au-dessus d'un substrat, et apte à se déformer en réponse à des contraintes externes. La déformation du micro-résonateur modifie sa longueur d'onde de résonance. L'analyse d'un faisceau lumineux émergeant du micro-résonateur permet donc d'obtenir une information relative à cette déformation. Dans la demande de brevet FR3068778 A1 (no. de demande FR20170056293), il est décrit le cas particulier d'un micro-résonateur en anneau constitué d'une pluralité de tronçons espacés les uns les autres, formant ensemble un guide sub-longueur d'onde. Cet agencement en tronçons séparés les uns des autres permet d'augmenter la sensibilité du micro-résonateur.

On connaît également dans l'art antérieur les documents suivants :

- le brevet US 10,031,158, qui décrit un capteur opto-mécanique pour déterminer une topographie de surface, dans lequel une pointe sonde est reliée à un guide d'onde photonique agencé suspendu ; et
- l'article « Periodic Modulation of Extraordinary Optical Transmission through Subwavelength Hole Arrays using surrounding Bragg Mirrors », Nathan C. Lindquist & al., Phys. Rev. B 76, 155106, qui rapporte les résultats d'une étude sur un dispositif de transmission à travers une matrice de trous entourée par des miroirs de Bragg.

Un objectif de la présente invention est de proposer un résonateur opto-mécanique qui présente un taux de couplage encore amélioré, en comparaison avec les résonateurs opto-mécaniques de l'art antérieur.

**EXPOSÉ DE L'INVENTION**

Cet objectif est atteint avec un résonateur opto-mécanique selon la revendication1.

L'au moins un élément mécanique déformable est apte à se déformer, en réponse à une contrainte externe, et en entraînant avec lui la région suspendue. La déformation de la région suspendue influe sur un signal optique confiné dans la cavité optiquement résonante, effectuant des allers et retours dans le guide d'onde en passant par ladite région suspendue. L'invention permet ainsi de réaliser un couplage opto-mécanique entre un déplacement mécanique dans le résonateur et une propriété physique d'un signal optique ayant transité dans ce dernier. Le couplage opto-mécanique est basé, notamment, sur une variation de l'indice effectif du guide d'onde dans la région suspendue, lorsque cette dernière se déforme.

Le résonateur opto-mécanique est intégré sur le substrat, ce qui lui confère une grande stabilité notamment en termes d'alignement, en comparaison avec les résonateurs opto-mécaniques de l'art antérieur formés en espace libre.

On peut montrer en outre que les taux de couplage obtenus dans le résonateur opto-mécanique selon l'invention sont supérieurs à ceux pouvant être obtenus dans les résonateurs opto-mécaniques de l'art antérieur, même intégrés sur puce. Les taux de couplage obtenus permettent de s'affranchir des conditions d'utilisation très strictes généralement imposées dans l'art antérieur (salle blanche et/ou température cryogénique).

De préférence, l'élément mécanique déformable est fixé relativement au substrat, à l'une au moins de ses extrémités le long d'un axe parallèle au guide d'onde.

L'au moins un élément mécanique déformable peut comprendre au moins un bras, qui s'étend le long d'au moins un axe parallèle au guide d'onde. En particulier, l'au moins un élément mécanique déformable peut comprendre deux bras, encadrant latéralement la région suspendue.

En variante, l'au moins un élément mécanique déformable peut comprendre au moins deux séries de tronçons, et, dans chaque série, les tronçons sont répartis le long d'un axe parallèle au guide d'onde et séparés deux à deux au moins par un interstice rempli d'un gaz ou d'un vide.

Selon une autre variante, l'au moins un élément mécanique déformable peut comprendre une membrane déformable, formant support pour la région suspendue.

Les différentes variantes peuvent être combinées ensemble.

De préférence, lesdits miroirs sont des miroirs de Bragg. Chacun desdits miroirs de Bragg comprend avantageusement une pluralité de seconds barreaux, constitués chacun d'un même matériau que les premiers barreaux du guide d'onde. Une partie au moins de l'un au moins desdits miroirs de Bragg peut faire partie de la région suspendue.

Avantageusement, les premiers barreaux du guide d'onde sont répartis les uns à la suite des autres selon un pas Λ de répartition tel que :

$$\Lambda < \frac{\lambda_0}{2n_h}$$

avec $\lambda_0$ la longueur d'onde centrale de la plage de longueurs d'onde de guidage du guide d'onde ; et $n_h$ l'indice de réfraction moyen des premiers barreaux.

L'invention concerne également un système comportant au moins deux résonateurs opto-mécaniques, dans lequel :

- chaque résonateur opto-mécanique comprend une cavité optiquement résonante, formée par un guide d'onde agencé entre deux miroirs, avec le guide d'onde qui comprend une pluralité de premiers barreaux espacés les uns des autres ;
- l'un au moins desdits résonateurs opto-mécaniques forme un résonateur opto-mécanique selon l'invention ; et
- les résonateurs opto-mécaniques sont couplés optiquement deux à deux, par couplage évanescent.

L'invention concerne aussi un dispositif de mesure comportant au moins un résonateur opto-mécanique selon l'invention et au moins un capteur optique, le capteur optique étant agencé pour recevoir un faisceau lumineux émergeant du résonateur opto-mécanique après y avoir effectué plusieurs allers et retours, et étant apte à mesurer une fluctuation en fonction du temps d'une propriété physique dudit faisceau lumineux.

## BRÈVE DESCRIPTION DES DESSINS

La présente invention sera mieux comprise à la lecture de la description d'exemples de réalisation donnés à titre purement indicatif et nullement limitatif, en faisant référence aux dessins annexés sur lesquels :

- les figures 1A à 1C illustrent de manière schématique, selon différentes vues, un premier mode de réalisation d'un résonateur opto-mécanique selon l'invention ;
- les figures 2, 3A et 3B illustrent différents modes de résonance mécanique dans le résonateur opto-mécanique des figures 1A à 1C ;
- les figures 4A et 4B illustrent de manière schématique le couplage opto-mécanique mis en œuvre dans un résonateur opto-mécanique selon l'invention ;
- la figure 5 illustre de manière schématique un dispositif de mesure comportant le résonateur opto-mécanique des figures 1A à 1C ;
- les figures 6A et 6B illustrent de manière schématique, et selon des vues de détails, deux variantes du résonateur opto-mécanique des figures 1A à 1C ;
- les figures 7 à 9 illustrent respectivement un deuxième, troisième et quatrième modes de réalisation d'un résonateur opto-mécanique selon l'invention ; et
- la figure 10 illustre de manière schématique un système selon l'invention, comportant deux résonateurs opto-mécaniques couplés optiquement, dont l'un au moins est un résonateur opto-mécanique selon l'invention.

## EXPOSÉ DÉTAILLÉ DE MODES DE RÉALISATION PARTICULIERS

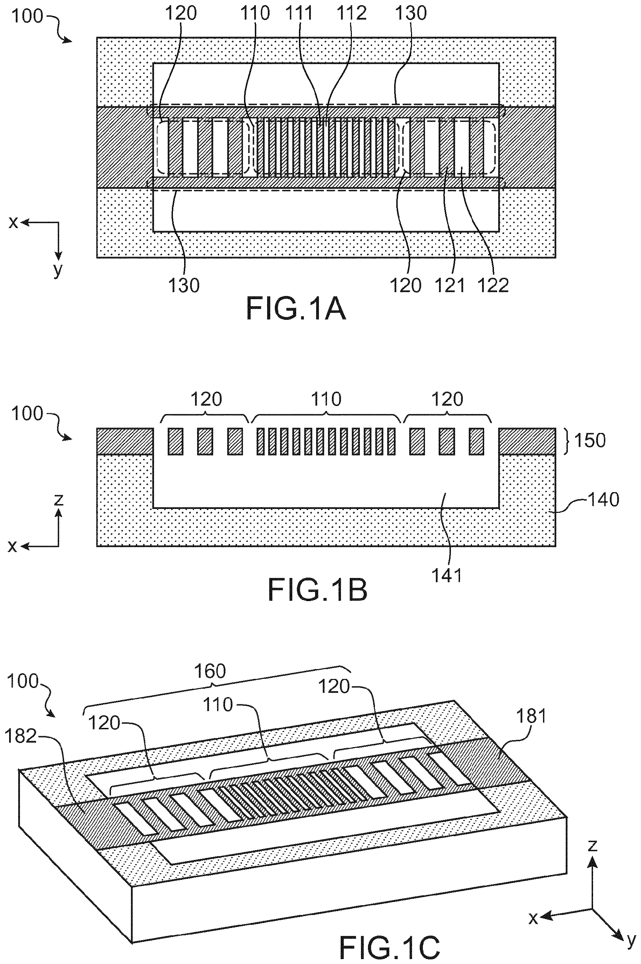

On décrit, en référence aux figures 1A à 1C, un premier mode de réalisation d'un résonateur opto-mécanique 100 selon l'invention. Sur les figures 1A à 1C, le résonateur opto-mécanique 100 est représenté respectivement selon une vue de dessus dans le plan (xOy) d'un repère orthonormé, selon une vue en coupe dans le plan (xOz) du même repère, et selon une vue en perspective.

Le résonateur opto-mécanique 100 comporte :

- un guide d'onde 110 sub-longueur d'onde ;
- deux miroirs de Bragg 120 ; et
- deux bras de soutien 130, encadrant latéralement le guide d'onde 110 et les miroirs de Bragg 120.

Le guide d'onde 110 et les miroirs de Bragg 120 sont agencés suspendus au-dessus d'un substrat 140 par l'intermédiaire des bras de soutien 130. Le guide d'onde 110, les miroirs de Bragg 120 et les bras de soutien sont entourés par un milieu environnant constitué d'un gaz ou d'un vide. La figure 1B est une vue en coupe du résonateur opto-mécanique 100, dans un plan (xOz) passant par le guide d'onde 110. La figure 1B montre en particulier une cavité 141, formée dans le substrat 140. Le guide d'onde 110, les miroirs de Bragg 120 et les bras de soutien sont suspendus au-dessus de la cavité 141.

Dans tout le texte, le terme « au repos » désigne une situation en l'absence de contrainte mécanique externe sur le résonateur opto-mécanique 100.

Le guide d'onde 110 est apte à guider un faisceau lumineux à une longueur d'onde appartenant à une plage de longueurs d'onde, nommée plage de longueurs d'onde de guidage du guide d'onde. Ladite plage de longueurs d'onde est centrée sur une longueur d'onde $\lambda_0$. Le guide d'onde 110 est configuré pour guider un faisceau lumineux selon un chemin optique linéaire. En l'absence de contrainte mécanique externe, ce chemin optique est rectiligne et s'étend selon un axe parallèle à l'axe (Ox).

Le guide d'onde 110 est un guide d'onde dit sub-longueur d'onde, ou SWG (pour l'anglais « Sub-Wavelength Grating »). Il est constitué de premiers barreaux 111, espacés les uns des autres et répartis les uns à la suite des autres le long de l'axe (Ox). Chaque premier barreau 111 présente une forme de parallélépipède rectangle. Tous les premiers barreaux 111 sont constitués ici d'un même matériau, par exemple du silicium. Ils sont séparés deux à deux par des espaces libres 112 remplis d'un gaz ou d'un vide.

En l'absence de contrainte mécanique externe, les barreaux 111 sont répartis selon un pas régulier A le long de l'axe (Ox), avec A très inférieur à $\lambda_0$. A cette échelle, la lumière n'est sensible qu'à un indice de réfraction moyen entre l'indice des barreaux 111 et l'indice des espaces libres 112 entre les barreaux 111, et n'est pas diffractée. En d'autres termes, le guide d'onde 110 se comporte comme un matériau d'indice de réfraction moyen :

$$n_{moy} = \sqrt{\frac{l}{\Lambda} n_h^2 + \frac{\Lambda - l}{\Lambda} n_b^2} \qquad (1)$$

avec :

$l$ la longueur d'un barreau 111, selon l'axe (Ox) ;
A le pas de répartition des barreaux 111 ;
$n_h$ l'indice de réfraction moyen dans un barreau 111 ; et
$n_b$ l'indice de réfraction moyen dans un espace libre 112, entre deux barreaux 111.

De préférence, le pas A vérifie en particulier :

$$\Lambda < \frac{\lambda_0}{2 n_{moy}} \qquad (2)$$

avec $\lambda_0$ la longueur d'onde centrale d'une plage de longueurs d'onde que le guide d'onde 110 est apte à guider.

On a même avantageusement :

$$\Lambda < \frac{\lambda_0}{2 n_h} \qquad (3)$$

avec $n_h$ l'indice de réfraction moyen dans un barreau 111.

En pratique, le pas de répartition A est avantageusement inférieur à 3 $\mu$m, et même inférieur à 2 $\mu$m, voire 1 $\mu$m.

On remarque que par abus de langage, on nomme ici « guide d'onde » le cœur du guide d'onde, la gaine étant constituée par le milieu environnant entourant les barreaux, ici un vide ou un gaz.

Les miroirs de Bragg 120 sont agencés de part et d'autre du guide d'onde 110. Ils s'étendent face à face, dans des plans (yOz) et orthogonaux à l'axe d'allongement du guide d'onde 110, au repos. Un miroir de Bragg est constitué classiquement d'un agencement périodique de couches d'indices optiques de réfraction n1, respectivement n2. Ici, les miroirs de Bragg sont agencés suspendus. Chaque miroir de Bragg 120 est constitué plus particulièrement d'une pluralité de seconds barreaux 121, espacés les uns des autres et répartis les uns à la suite des autres le long de l'axe (Ox). Ici, du fait de l'agencement suspendu des miroirs, les seconds barreaux 121 sont séparés deux à deux par un espace libre respectif 122 rempli d'un gaz ou d'un vide. Chaque second barreau 121 présente une forme de parallélépipède rectangle. Les seconds barreaux 121 sont constitués ici d'un même matériau que celui des premiers barreaux 111, ici du silicium.

Chaque miroir de Bragg 120 est optiquement réfléchissant sur une plage de longueurs d'onde au moins partiellement superposée avec la plage de longueurs d'onde de guidage du guide d'onde 110.

Les miroirs de Bragg 120 définissent avec le guide d'onde 110 une cavité optique 160, optiquement résonante, dans laquelle la lumière effectue des allers et retours successifs dans le guide d'onde 110, en étant réfléchie alternativement par l'un puis l'autre des deux miroirs de Bragg 120. La cavité optique 160 est une cavité optique linéaire, qui se rapproche à ce titre d'une cavité de type Fabry-Perot excepté que la lumière ne circule pas en espace libre entre les deux miroirs. La cavité optique 160 est optiquement résonante à la longueur d'onde $\lambda_r$ qui appartient à la fois à la plage de longueurs d'onde de guidage du guide d'onde 110 et la plage de longueurs d'onde réfléchie par les miroirs de Bragg.

Les bras de soutien 130 s'étendent de part et d'autres des premiers et seconds barreaux 111, 121. Chaque premier barreau 111 et chaque second barreau 121 a une extrémité fixée à l'un des bras de soutien 130, et l'autre extrémité fixée à l'autre des bras de soutien. Les bras de soutien sont avantageusement constitués d'un même matériau que les premiers barreaux 111 du guide d'onde, ici du silicium. En pratique, les bras de soutien 130, les premiers barreaux 111 et les seconds barreaux 121 sont avantageusement formés ensemble d'un seul tenant, gravés dans une même couche (voir figure 1B, couche 150 recouvrant le substrat 140). La largeur des bras de soutien 130 (selon l'axe (Oy)) vérifie de préférence la même condition que le pas A à l'équation (3), pour éviter des fuites optiques par les bras de soutien. La largeur des bras de soutien est par exemple de l'ordre de 0,1 μm.

Chaque bras de soutien 130 est maintenu suspendu au-dessus du substrat 140, avec ses deux extrémités fixes relativement au substrat 140 (extrémités le long de l'axe (Ox)). Entre ses deux extrémités, chaque bras de soutien 130 est apte à se déformer mécaniquement en réaction à une contrainte mécanique externe exercée par exemple par une force inertielle, une onde acoustique, une particule, etc. Chaque bras de soutien 130 forme donc un élément mécanique déformable.

Lorsqu'ils se déforment, les bras de soutien 130 entraînent avec eux les premiers barreaux 111 du guide d'onde 110 ainsi que les seconds barreaux 121 des miroirs de Bragg 120. Par conséquent, la déformation des bras de soutien 130 se traduit par une déformation correspondante du guide d'onde 110 et des miroirs de Bragg 120.

Lorsqu'il est déformé par l'intermédiaire des bras de soutien 130, le guide d'onde 110 ne s'étend plus selon une ligne droite, mais selon une ligne courbe. Cette ligne présente une longueur dite curviligne, supérieure à la longueur du guide d'onde, au repos.

La déformation du guide d'onde 110 se traduit également par une augmentation de la longueur des espaces libres 112 entre deux premiers barreaux et/ou une augmentation de la longueur des premiers barreaux 111, lesdites longueurs étant mesurées le long de la ligne courbe définissant la forme du guide d'onde 110. Un rapport entre la longueur d'un premier barreau 111 et la longueur d'un espace libre 112 est donc modifié, ce qui se traduit par une modification de l'indice optique moyen du guide d'onde ($n_{moy}$, équation (1)) et donc de l'indice effectif vu par la lumière dans le guide d'onde 110 (sensiblement égal à $n_{moy}$).

La variation de l'indice effectif du guide d'onde 110, et la variation de la longueur curviligne du guide d'onde 110, participent toutes deux à faire varier les valeurs des longueurs d'onde de résonance $\lambda_r$ de la cavité optique 160. Ces différentes grandeurs sont en effet reliées par :

$$\omega_r = 2\pi m \frac{c}{n_{eff} L} \qquad (4)$$

avec m un entier positif,

c la célérité de la lumière dans le vide,

$\omega_r$ une fréquence de résonance de la cavité optique, liée à une longueur d'onde de résonance $\lambda_r$ par $\omega_r = \frac{2\pi c}{\lambda_r}$,

$n_{eff}$ l'indice effectif vu par la lumière dans la cavité optique 160, égal ici à l'indice effectif vu par la lumière dans le guide d'onde 110, et
L la longueur curviligne de la cavité optique 160, égale ici à la longueur curviligne du guide d'onde 110.

La déformation du guide d'onde 110 se traduit donc, *in fine,* par une variation de la longueur d'onde de résonance $\lambda_r$ de la cavité optique 160. Cette variation de la longueur d'onde de résonance $\lambda_r$ se traduit par un décalage relativement à la longueur d'onde $\lambda_s$ d'un signal optique circulant dans la cavité optique 160, et donc par une diminution du signal à la longueur d'onde $\lambda_s$ en sortie de la cavité 160. Plus la longueur d'onde de résonance $\lambda_r$ s'éloigne de $\lambda_s$, plus la transmission du signal optique à la longueur d'onde $\lambda_s$ diminue.

Ainsi, un déplacement mécanique dans le résonateur opto-mécanique 100 se traduit par une variation d'un signal optique émergeant dudit résonateur 100 après y avoir effectué plusieurs allers et retours. L'observation du signal optique émergeant du résonateur 100 donne donc une information sur un déplacement mécanique dans le résonateur, et donc sur le phénomène à l'origine de ce déplacement. Il est ainsi possible de détecter et, le cas échéant, de mesurer une force qui s'applique sur le résonateur opto-mécanique, à partir d'une mesure sur un signal ayant transité dans ce dernier. On peut par exemple mesurer une variation de l'intensité lumineuse à la longueur d'onde $\lambda_s$, ou une variation de la longueur d'onde de résonance $\lambda_r$ (en injectant en entrée du résonateur 100 un signal large spectre dont seule la portion à la longueur d'onde de résonance $\lambda_r$ va pouvoir être transmise par le résonateur 100).

L'invention permet d'obtenir de meilleures sensibilités que dans l'art antérieur, puisque l'application d'une force externe sur le résonateur opto-mécanique fait varier deux, et non un seul des paramètres définissant la longueur d'onde de résonance $\lambda_r$ de la cavité optique 160 (longueur de la cavité et indice effectif).

Dans l'exemple illustré ici, les miroirs de Bragg 120 sont également agencés suspendus, par l'intermédiaire des bras de soutien 130. Par conséquent, la déformation des bras de soutien 130 se traduit également par une déformation des miroirs de Bragg 120. Cette déformation peut se traduire par une augmentation de l'intervalle entre deux seconds barreaux 122 et/ou une augmentation de la longueur des seconds barreaux 121. Les taux de transmission et de réflexion des miroirs de Bragg sont modifiés en conséquence, ce qui augmente les pertes dans la cavité optique 160, et contribue à réduire l'intensité lumineuse d'un signal à la longueur d'onde $\lambda_s$ en sortie du résonateur opto-mécanique. La sensibilité du résonateur est ainsi encore augmentée. En outre, il est possible d'exploiter cet effet pour réduire le bruit quantique dans le résonateur.

En pratique, un faisceau lumineux peut être amené et extrait du résonateur opto-mécanique 100 par au moins un guide d'onde annexe, intégré dans un même substrat que le résonateur. Ici, la lumière est amenée d'un côté par un premier guide d'onde annexe 181, et extraite de l'autre côté par un second guide d'onde annexe 182. Ici, chaque guide d'onde annexe 181, 182 a un cœur constitué du même matériau que les premiers barreaux du guide d'onde 110, et une gaine constituée du matériau du substrat 140.

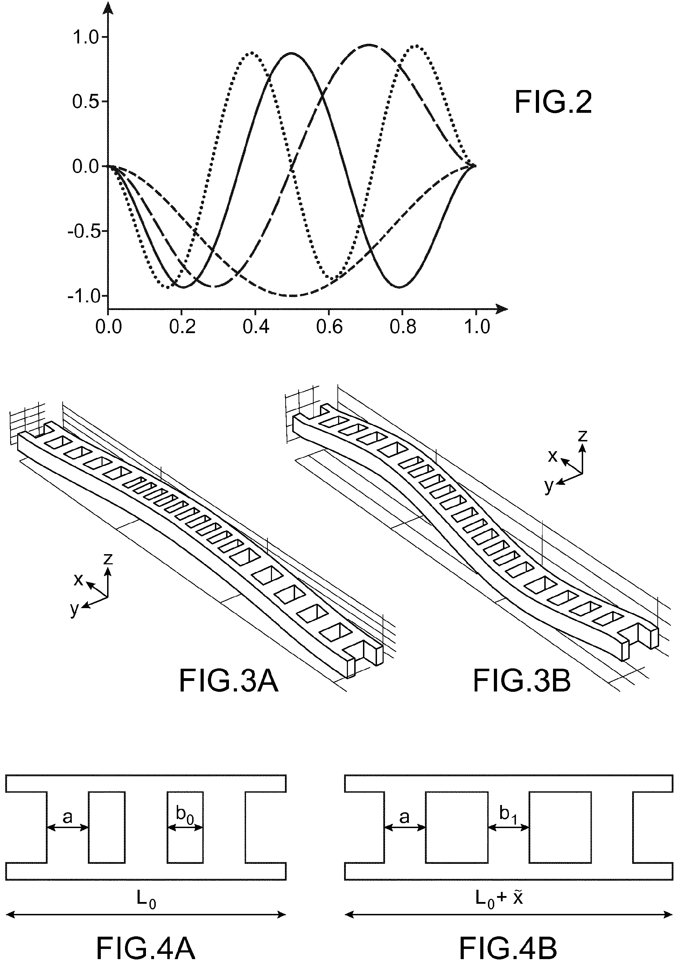

Les bras de soutien et les éléments qu'ils maintiennent suspendus au-dessus du substrat 140 forment ensemble un ensemble suspendu. Cet ensemble suspendu se déforme généralement selon un mouvement d'oscillation, qui correspond à l'un de ses modes de vibration mécanique. Ici, l'ensemble suspendu est maintenu au substrat par les deux extrémités des bras de soutien, de sorte que les modes de vibration mécanique sont ceux d'une poutre doublement encastrée. A la figure 2, on a représenté les quatre premiers modes de vibration mécanique. L'axe des abscisses est une position normalisée le long de l'axe (Ox), l'axe des ordonnées est une position normalisée le long de l'axe (Oy). Les courbes de la figure 2 ont été obtenues pour un résonateur du type de celui des figures 1A à 1C, avec un guide d'onde de pas A = 200 *nm* comportant 10 périodes, et des miroirs de Bragg comportant chacun 5 seconds barreaux. Les figures 3A et 3B illustrent le guide d'onde 110, selon une vue en perspective, et au maximum de sa déformation, pour les deux premiers modes de vibrations illustrés à la figure 2.

On s'intéresse dans la suite au taux de couplage pouvant être obtenu dans un résonateur opto-mécanique selon l'invention.

Aux figures 4A et 4B, on a illustré de façon schématique la déformation du guide d'onde. Lorsqu'il se déforme, le guide d'onde passe d'une longueur initiale $L_0$ à une longueur $L_0 + \tilde{x}$. Initialement, le guide d'onde est constitué de premiers barreaux 111 de longueur $a$ séparés deux à deux par un espace libre de longueur $b_0$. L'augmentation de longueur $\tilde{x}$ peut se retrouver dans une augmentation de la longueur des premiers barreaux 111 et/ou une augmentation de la longueur des espaces libres. En pratique, et comme illustré sur les figures 4A et 4B, l'augmentation de longueur $\tilde{x}$ se retrouve dans une augmentation de la longueur des espaces libres.

Le couplage opto-mécanique $g_{om}$ mis en œuvre dans le résonateur 100 est défini par :

$$g_{om} = \frac{\partial \omega_r}{\partial \tilde{x}} \qquad (5)$$

avec $\tilde{x}$ une variation de la longueur du guide d'onde, et $\omega_r$ une fréquence de résonance de la cavité optique appartenant audit résonateur.

On peut montrer que $g_{om}$ est fonction notamment de $L(\tilde{x})$ (longueur de la cavité optique, en fonction de $\tilde{x}$) et de $n_{eff}(x)$ (indice effectif vu par l'onde guidée dans la cavité optique, en fonction de $\tilde{x}$). On remarque que dans un résonateur opto-mécanique à cavité Fabry-Pérot selon l'art antérieur, l'indice effectif est une constante. Ici, l'utilisation d'un guide sub-longueur d'onde dans la cavité optique permet d'introduire cette variation d'indice effectif. En particulier, et comme détaillé ci-avant, la déformation du guide d'onde module un rapport de forme entre les premiers barreaux et les espaces libres, ce qui module l'indice de réfraction moyen du cœur du guide, et donc l'indice effectif vu par la lumière circulant dans le guide. On voit donc que l'invention permet d'obtenir un coefficient de couplage opto-mécanique $g_{om}$ supérieur à ceux de l'art antérieur, notamment ceux des résonateurs opto-mécaniques de l'art antérieur de type Fabry-Pérot.

L'expression de $L(\tilde{x})$, puis de $\dfrac{\partial L}{\partial \tilde{x}}$, peut être obtenue par résolution numérique exacte, ou à l'aide d'un modèle analytique simplifié (en prenant comme hypothèses que la variation de longueur $\tilde{x}$ est uniformément répartie le long du guide d'onde, et que le matériau des premiers barreaux n'est pas sensible au déplacement).

De même, on peut calculer $n_{eff}(\tilde{x})$ puis $\dfrac{\partial n_{eff}}{\partial \tilde{x}}$ de manière approchée à l'aide d'une méthode d'indice effectif rapporté sur deux dimensions, ou de manière exacte par résolution numérique.

On a par exemple déterminé des valeurs de $g_{om}$ de manière analytique, dans le cas d'un guide d'onde constitué de premiers barreaux en silicium, baignant dans de l'air. Les premiers barreaux ont une section de 500nm*200nm, et sont répartis selon un pas A = 0,2 $nm$. Le rapport de forme entre les barreaux et les espaces libres est de 0,5 (au repos), et la longueur au repos du guide d'onde est $L_0$ = 10 $\mu m$ (soit 50 périodes). Les miroirs de Bragg 120 sont constitués chacun de 10 périodes de 460 nm, et sont supposés ici immobiles et non suspendus. A la longueur d'onde $\lambda_s$ = 1,55 $\mu m$ on obtient $g_{om}$ = 121,6 $GHz/nm$.

Le même calcul est réalisé par simulation numérique. Plusieurs simulations sont réalisées pour différentes valeurs de $\tilde{x}$. On calcule ensuite $g_{om}$ à partir de la position des pics de résonance en fonction de $\tilde{x}$ (voir définition de $g_{om}$ à l'équation (5)). La valeur de $g_{om}$ obtenue par simulation numérique est du même ordre de grandeur, et cohérente avec celle obtenue par méthode analytique.

On montre ainsi que l'invention permet d'obtenir des valeurs élevées de $g_{om}$, qui est la variation de la fréquence optique transmise par le résonateur opto-mécanique en fonction de l'allongement de la cavité optique dudit résonateur. La valeur de $g_{om}$ définit la valeur de $g_o = g_{om}x_{ZPF}$, qui représente le taux de couplage entre un unique photon et un unique phonon dans le résonateur opto-mécanique selon l'invention. $x_{ZPF}$ désigne le mouvement de point zéro, c'est-à-dire la variation de la longueur du guide d'onde associée à l'état fondamental du guide d'onde, lorsque son énergie est nulle. Pour un guide d'onde supporté par des bras de soutien doublement encastré, on obtient en particulier $x_{ZPF}$ = 87,06 $fm$ = 8,706 * 10$^{-14}$m et finalement $\dfrac{g_o}{2\pi} = 1{,}685\ MHz$. En tout état de cause, l'invention permet d'obtenir des valeurs élevées de $g_o$, supérieures d'au moins un ordre de grandeur aux valeurs obtenues dans les divers dispositifs de l'art antérieur.

Le gain d'au moins un ordre de grandeur sur les valeurs de $g_o$ permet d'augmenter un rapport signal sur bruit du résonateur opto-mécanique selon l'invention et/ou de relâcher les contraintes expérimentales, notamment celles relatives à la température de fonctionnement. En particulier, le résonateur opto-mécanique selon l'invention offre de bonnes performances en l'absence de refroidissement à température cryogénique, et peut même fonctionner à température ambiante.

Outre l'obtention de valeurs élevées de $g_{om}$, le guide d'onde sub-longueur d'onde permet de réduire des effets non linéaires dans le résonateur opto-mécanique selon l'invention. On obtient ainsi une large plage de fonctionnement linéaire.

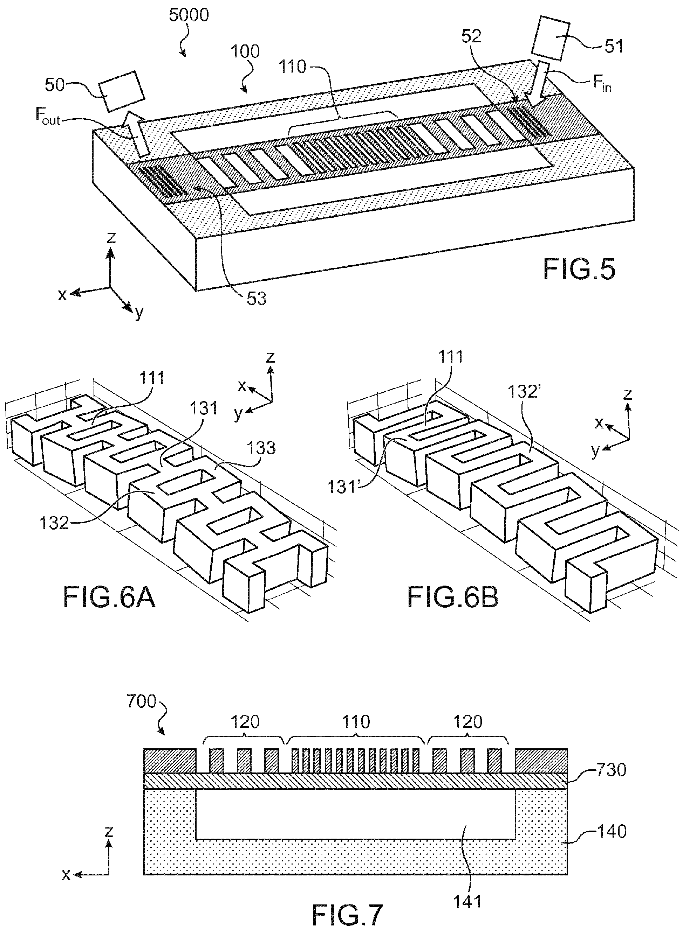

La figure 5 illustre de manière schématique un dispositif de mesure 5000 comportant un résonateur opto-mécanique 100, tel que décrit en référence aux figures 1A à 1C, et un capteur optique 50.

En fonctionnement, une source lumineuse 51 émet un faisceau lumineux $F_{in}$, de préférence un faisceau lumineux monochromatique centré sur la longueur d'onde $\lambda_s$. Le faisceau lumineux $F_{in}$ est injecté dans le résonateur opto-mécanique 100. La source lumineuse 51 peut être intégrée dans le substrat 140 du résonateur opto-mécanique 100. En variante, la source lumineuse 51 est déportée du substrat 140, et le faisceau lumineux $F_{in}$ est amené d'abord jusqu'à un premier réseau de couplage 52 qui réalise un couplage optique entre un circuit photonique dans le substrat et l'extérieur du substrat.

Le capteur optique 50 est agencé de manière à recevoir un faisceau lumineux $F_{out}$ émergeant du résonateur opto-mécanique 100 après y avoir effectué plusieurs allers et retours. Le capteur optique 50 peut être intégré dans le substrat 140 du résonateur opto-mécanique 100. En variante, le capteur optique 50 est déporté du substrat 140, et le faisceau lumineux $F_{out}$ est amené d'abord jusqu'à un second réseau de couplage 53 qui réalise un couplage optique entre un circuit photonique dans le substrat et l'extérieur du substrat. Ici, le capteur optique 50 et la source lumineuse 51 sont disposés aux deux extrémités opposées du résonateur opto-mécanique 100, le long de l'axe d'allongement (Ox) du guide d'onde 110.

Le capteur optique 50 est apte à mesurer une fluctuation, en fonction du temps, d'une propriété physique du faisceau lumineux $F_{out}$. Cette propriété est de préférence une intensité lumineuse à la longueur d'onde $\lambda_s$. En variante, le faisceau lumineux $F_{in}$ présente un spectre d'au moins quelques nm de large, et la propriété mesurée par le capteur optique 50 est une longueur d'onde d'un pic d'intensité du faisceau $F_{out}$. On mesure alors une variation de la longueur d'onde de résonance du résonateur opto-mécanique 100.

Le dispositif de mesure 5000 forme avantageusement un capteur inertiel tel qu'un gyromètre ou un accéléromètre, ou tout autre capteur de force. Il peut également former un capteur photo-acoustique.

Sur les figures 1A à 1C, on a représenté un mode de réalisation de l'invention dans lequel le guide d'onde et les miroirs sont maintenus suspendus par deux bras de soutien encadrant latéralement ces derniers. Les figures 6A et 6B illustrent des variantes dans lesquelles le guide d'onde et les miroirs sont maintenus suspendus par l'intermédiaire d'au moins deux séries de tronçons de bras. Les tronçons s'étendent avec le guide d'onde et les miroirs de Bragg dans un même plan parallèle au substrat. Ils présentent les mêmes caractéristiques sur les bras de soutien en termes de matériau et de section dans un plan (xOz). Dans chaque série :

- les tronçons s'étendent chacun entre deux barreaux voisins du guide d'onde, respectivement entre deux barreaux voisins des miroirs de Bragg ;
- au repos, les tronçons sont répartis les uns à la suite des autres selon un axe parallèle à l'axe d'allongement (Ox) du guide d'onde ; et
- les tronçons sont espacés les uns des autres, séparés deux à deux par un espace libre entre deux barreaux voisins.

A la figure 6A, les premiers barreaux 111 du guide d'onde (et les seconds barreaux des miroirs de Bragg) sont maintenus solidaires les uns des autres par l'intermédiaire de trois séries de tronçons. Dans une première série, les tronçons 131 s'étendent selon un axe passant par le milieu des barreaux selon l'axe (Oy). Dans une deuxième série, les tronçons 132 s'étendent selon un axe passant par l'une extrémité des barreaux selon l'axe (Oy). Dans une troisième série, les tronçons 133 s'étendent selon un axe passant par l'autre extrémité des barreaux selon l'axe (Oy). Les barreaux sont regroupés en groupes de deux barreaux. Dans chaque groupe, les deux barreaux sont reliés ensemble à leurs deux extrémités respectives par un tronçon 132 et un tronçon 133. Les groupes de deux barreaux sont reliés deux à deux par un tronçon 131.

A la figure 6B, les premiers barreaux 111 du guide d'onde (et les seconds barreaux des miroirs de Bragg) sont maintenus solidaires les uns des autres par l'intermédiaire de deux séries de tronçons. Dans une première série, les tronçons 131' s'étendent selon un axe passant par l'une extrémité des barreaux selon l'axe (Oy). Dans une deuxième série, les tronçons 132' s'étendent selon un axe passant par l'autre extrémité des barreaux selon l'axe (Oy). Les barreaux et les tronçons sont agencés ensemble selon un motif en créneaux.

Dans les exemples décrits ci-dessus, l'agencement suspendu est réalisé par l'intermédiaire de bras ou de tronçons, de largeur très inférieure à la largeur des premiers barreaux du guide d'onde. En variante, l'agencement suspendu peut être réalisé par l'intermédiaire d'une fine membrane, formant support pour les éléments suspendus. Un exemple d'une telle variante est illustré en figure 7.

Le résonateur opto-mécanique 700 de la figure 7, ne diffère de celui des figures 1A à 1C qu'en ce que le guide d'onde 110 et les miroirs de Bragg 120 ne sont pas agencés suspendus par des bras de soutien, mais par une membrane 730 qui au repos s'étend dans un plan parallèle au plan (xOy), entre le substrat 140 et l'ensemble formé par le guide d'onde et les miroirs de Bragg. La membrane 730 est constituée par exemple d'une fine couche de silicium, qui recouvre la cavité 141 formée dans le substrat 140. La membrane 730 est apte à se déformer mécaniquement en réponse à une sollicitation par une contrainte mécanique externe, exercée par exemple par une force inertielle, une onde acoustique, une particule, etc. L'épaisseur de la membrane 730 est par exemple inférieure à 200 nm.

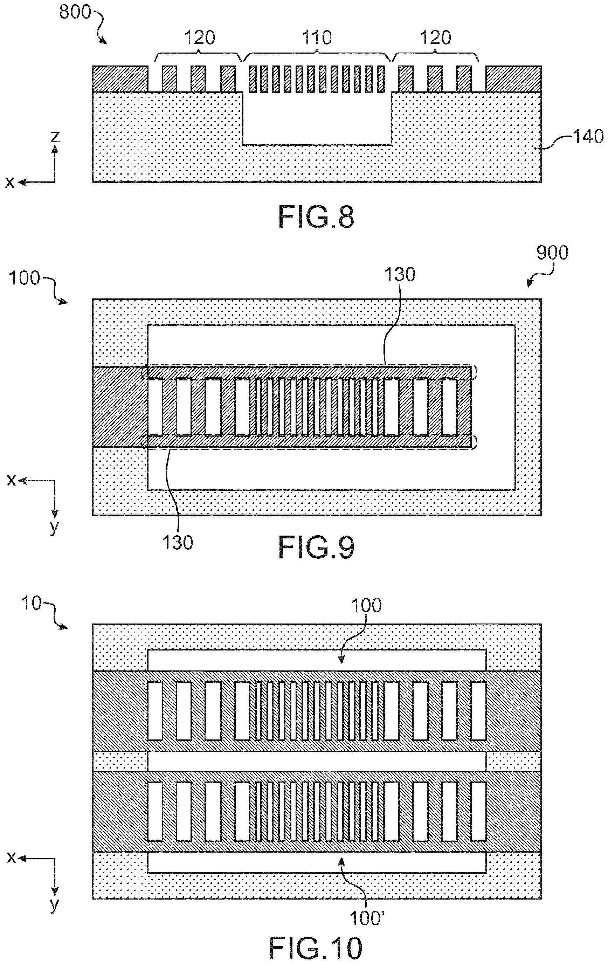

Dans les exemples décrits ci-dessus, l'intégralité de l'ensemble constitué par les miroirs de Bragg et le guide d'onde est agencée suspendue au-dessus du substrat. En variante, seule une partie de cet ensemble est agencée suspendue au-dessus du substrat. Par exemple, les miroirs de Bragg ne sont pas forcément agencés suspendus. L'un, voire les deux miroirs de Bragg, peut (peuvent) être agencé(s) fixe(s) relativement au substrat, en totalité ou sur une partie seulement de sa longueur. En revanche, on a toujours une partie au moins du guide d'onde qui est agencée suspendue au-dessus du substrat. Un exemple d'une telle variante est illustré en figure 8. Le résonateur opto-mécanique 800 de la figure 8, ne diffère de celui des figures 1A à 1C qu'en ce que seul le guide d'onde 110 est agencé suspendu au-dessus du substrat 140, les miroirs de Bragg 120 étant fixes relativement au substrat 140.

Dans les exemples décrits ci-dessus, l'agencement suspendu est réalisé par l'intermédiaire d'au moins un élément mécanique déformable, fixé au substrat par ses deux extrémités selon l'axe (Ox) (axe d'allongement du guide d'onde, au repos). Les éléments suspendus se comportent alors mécaniquement comme une poutre doublement encastrée de masse réduite. En variante, l'au moins un élément mécanique déformable n'est fixé au substrat que par une seule de ses deux extrémités selon l'axe (Ox). Dans ce cas, l'injection et l'extraction d'un faisceau lumineux dans et hors du résonateur opto-mécanique sont réalisées du même côté du guide d'onde. Un exemple d'une telle variante est illustré en figure 9. Le résonateur opto-mécanique 900 de la figure 9, ne diffère de celui des figures 1A à 1C qu'en ce qu'en ce que les bras de soutien 130 ne sont agencés fixes relativement au substrat que d'un seul côté le long de l'axe (Ox). Le comportement mécanique des éléments suspendus est alors celui d'une poutre ancrée à une seule extrémité.

La figure 10 illustre de manière schématique, selon une vue de dessus, un système 10 comportant deux résonateurs opto-mécaniques selon l'invention 100, 100'.

Les deux résonateurs opto-mécaniques 100, 100' sont deux résonateurs du type de celui des figures 1A à 1C, qui partagent un même substrat. Au repos, les guides d'onde sub-longueur d'onde des deux résonateurs s'étendent tous deux parallèles à l'axe (Ox), dans un même plan (xOy) parallèle au plan du substrat.

Les deux résonateurs 100, 100' sont agencés suffisamment proches l'un de l'autre pour permettre un couplage optique évanescent entre eux, au niveau de leurs guides d'onde respectifs, entre leurs miroirs de Bragg respectifs. Le couplage optique évanescent dépend directement de la distance séparant les deux guides d'onde. Ainsi, la mise en mouvement des guides d'onde modifie le taux de couplage associé à ce couplage évanescent, ce qui permet d'amplifier encore l'effet d'un déplacement mécanique sur un signal optique circulant dans l'un ou l'autre desdits résonateurs.

Dans d'autres variantes, un seul des résonateurs est un résonateur selon l'invention, l'autre ne différant du résonateur selon l'invention qu'en ce que ni le guide d'onde ni les miroirs de Bragg ne sont agencés suspendus. Selon d'autres variantes encore, les deux résonateurs sont agencés dans des plans différents chacun parallèles au plan du substrat, par exemple l'un au-dessus de l'autre le long de l'axe (Oz).

Le résonateur opto-mécanique selon l'invention est avantageusement réalisé à l'aide des technologies photoniques standard sur silicium, par exemple à partir d'un wafer de type silicium sur isolant. Le wafer est constitué d'un substrat inférieur (généralement en silicium), recouvert d'une couche épaisse d'oxyde (par exemple 2 $\mu$m de $SiO_2$), elle-même recouverte d'une couche supérieure de silicium (par exemple 220 nm d'épaisseur).

Le guide d'onde, les miroirs de Bragg et les bras de soutien sont réalisés par gravure locale de la couche supérieure de silicium, sur toute son épaisseur. La gravure utilise par exemple un masque dur qui est retiré après gravure.

L'agencement suspendu du guide d'onde et des miroirs de Bragg par l'intermédiaire des bras de soutien est réalisé par gravure locale dans la couche épaisseur d'oxyde, sur une partie seulement de son épaisseur (gravure à l'acide fluorhydrique, par exemple).

L'invention n'est pas limitée aux exemples décrits ci-dessus. En particulier, les différentes variantes, modes de réalisations, systèmes et dispositifs décrits ci-dessus peuvent être combinés ensemble sans sortir du cadre des revendications et ainsi de l'invention.

En outre, d'autres variantes peuvent être mises en œuvre sans sortir du cadre de l'invention, par exemple avec des miroirs de Bragg comprenant un matériau différent de celui des premiers barreaux du guide d'onde, ou avec des miroirs constitués plutôt d'un revêtement métallique, ou avec une cavité en triangle ou autre polygone, etc. De la même façon, l'agencement suspendu peut être réalisé par un nombre quelconque de bras de soutien (ou séries de tronçons), centrés ou non sur le guide d'onde. On a cité l'exemple du silicium pour le matériau du guide d'onde, mais tout autre matériau apte à former le cœur d'un guide d'onde optique peut également être utilisé (SiN, GaS, Ge, etc.).

Le résonateur opto-mécanique selon l'invention peut être intégré au sein d'un circuit photonique. En tout état de cause, il offre tous les avantages liés à l'optique intégrée : production en masse, faible coût, opération expérimentale simplifiée, système directement embarqué, et peut fonctionner de manière tout-optique.

Dans un mode de réalisation voisin de l'invention, l'au moins un élément mécanique déformable est constitué d'un unique bras de soutien, large, et passant par le milieu des premiers barreaux du guide d'onde. Le bras de soutien forme alors le cœur du guide, tandis que les barreaux et le milieu environnant forment la gaine du guide.

**Revendications**

1.   Résonateur opto-mécanique (100 ; 700 ; 800 ; 900), comprenant

- un substrat (140) et
- un guide d'onde (110) constitué d'une pluralité de premiers barreaux (111) espacés les uns des autres,
- le résonateur opto-mécanique comprenant par ailleurs au moins deux miroirs (120) disposés face à face, optiquement réfléchissants sur une partie au moins d'une plage de longueurs d'onde de guidage du guide d'onde ;
- le guide d'onde (110) s'étendant entre les deux miroirs (120), et formant avec ces derniers une cavité optiquement résonante (160) ; et résonateur opto-mécanique comprenant par ailleurs une région dite suspendue, comprenant au moins un élément mécanique déformable (130 ; 730) et une partie du guide d'onde (110) au moins, et qui est maintenue suspendue au-dessus du substrat (140) par ledit au moins un élément mécanique déformable (130 ; 730), **caractérisé en ce que** ladite région suspendue s'étend en ligne droite, et lorsque ladite région suspendue est déformée via l'élément mécanique déformable (130 ; 170), la région suspendue ne s'étend plus en ligne droite mais en ligne courbe, d'où il résulte une variation de l'indice effectif du guide d'onde dans la région suspendue.

**2.** Résonateur opto-mécanique (100 ; 700 ; 800 ; 900) selon la revendication 1, **caractérisé en ce que** l'élément mécanique déformable (130 ; 730) est fixé relativement au substrat (140), à l'une au moins de ses extrémités le long d'un axe parallèle au guide d'onde.

**3.** Résonateur opto-mécanique (100 ; 800 ; 900) selon la revendication 1 ou 2, **caractérisé en ce que** l'au moins un élément mécanique déformable (130) comprend au moins un bras, qui s'étend le long d'au moins un axe parallèle au guide d'onde.

**4.** Résonateur opto-mécanique (100 ; 800 ; 900) selon la revendication 3, **caractérisé en ce que** l'au moins un élément mécanique déformable comprend deux bras (130), encadrant latéralement la région suspendue.

**5.** Résonateur opto-mécanique selon la revendication 3, **caractérisé en ce que** l'au moins un élément mécanique déformable comprend au moins deux séries de tronçons, et **en ce que**, dans chaque série, les tronçons (131, 132, 133 ; 131', 132') sont répartis le long d'un axe parallèle au guide d'onde et séparés deux à deux au moins par un interstice rempli d'un gaz ou d'un vide.

**6.** Résonateur opto-mécanique (700) selon la revendication 3, **caractérisé en ce que** l'au moins un élément mécanique déformable comprend une membrane déformable (730), formant support pour la région suspendue.

**7.** Résonateur opto-mécanique (100; 700; 800; 900) selon l'une quelconque des revendications 1 à 6, **caractérisé en ce que** lesdits miroirs (120) sont des miroirs de Bragg.

**8.** Résonateur opto-mécanique (100 ; 700 ; 800 ; 900) selon la revendication 7, **caractérisé en ce que** chacun desdits miroirs de Bragg (120) comprend une pluralité de seconds barreaux (122), constitués chacun d'un même matériau que les premiers barreaux (111) du guide d'onde.

**9.** Résonateur opto-mécanique (100 ; 700 ; 900) selon la revendication 7 ou 8, **caractérisé en ce qu'**une partie au moins, de l'un au moins desdits miroirs de Bragg (120), fait partie de la région suspendue.

**10.** Résonateur opto-mécanique (100; 700; 800; 900) selon l'une quelconque des revendications 1 à 9, **caractérisé en ce que** les premiers barreaux (111) du guide d'onde sont répartis les uns à la suite des autres selon un pas $\Lambda$ de répartition tel que :

$$\Lambda < \frac{\lambda_0}{2n_h}$$

avec $\lambda_0$ la longueur d'onde centrale de la plage de longueurs d'onde de guidage du guide d'onde ; et $n_h$ l'indice de réfraction moyen des premiers barreaux (111).

**11.** Système (10) comportant au moins deux résonateurs opto-mécaniques (100, 100'), dans lequel :

- chaque résonateur opto-mécanique (100, 100') comprend une cavité optiquement résonante, formée par un guide d'onde (110) agencé entre deux miroirs, avec le guide d'onde qui comprend une pluralité de premiers barreaux (111) espacés les uns des autres ;
- l'un au moins desdits résonateurs opto-mécaniques (100, 100') forme un résonateur opto-mécanique selon l'une quelconque des revendications 1 à 10 ; et
- les résonateurs opto-mécaniques (100, 100') sont couplés optiquement deux à deux, par couplage évanescent.

**12.** Dispositif de mesure (5000) comportant au moins un résonateur opto-mécanique (100) selon l'une quelconque des revendications 1 à 10 et au moins un capteur optique (50), le capteur optique (50) étant agencé pour recevoir un faisceau lumineux ($F_{out}$) émergeant du résonateur opto-mécanique après y avoir effectué plusieurs allers et retours, et étant apte à mesurer une fluctuation en fonction du temps d'une propriété physique dudit faisceau lumineux.

**Patentansprüche**

1. Optomechanischer Resonator (100; 700; 800; 900), umfassend:

   - ein Substrat (140) und
   - einen Wellenleiter (110), der aus einer Vielzahl von ersten Stäben (111) besteht, die zueinander beabstandet sind,
   - wobei der optomechanische Resonator ferner wenigstens zwei Spiegel (120) umfasst, die einander gegenüberliegend angeordnet sind und wenigstens in einem Teil eines Bereichs von Führungswellenlängen des Wellenleiters optisch reflektiert werden;
   - wobei sich der Wellenleiter (110) zwischen den beiden Spiegeln (120) erstreckt und mit diesen einen optisch resonanten Hohlraum (160) bildet; und
   - wobei der optomechanische Resonator ferner einen sogenannten hängenden Bereich umfasst, der wenigstens ein verformbares mechanisches Element (130; 730) und wenigstens einen Teil des Wellenleiters (110) umfasst, der durch das wenigstens eine verformbare mechanische Element (130; 730) über dem Substrat (140) hängend gehalten wird,

   **dadurch gekennzeichnet, dass** sich der hängende Bereich in einer geraden Linie erstreckt, und sich der hängende Bereich, wenn der hängende Bereich über das verformbare mechanische Element (130; 170) verformt wird, nicht mehr in einer geraden Linie, sondern in einer gekrümmten Linie erstreckt, was zu einer Änderung des effektiven Index des Wellenleiters in dem hängenden Bereich führt.

2. Optomechanischer Resonator (100; 700; 800; 900) nach Anspruch 1, **dadurch gekennzeichnet, dass** das verformbare mechanische Element (130; 730) in Bezug auf das Substrat (140) an wenigstens einem seiner Enden entlang einer Achse parallel zum Wellenleiter befestigt ist.

3. Optomechanischer Resonator (100; 800; 900) nach Anspruch 1 oder 2, **dadurch gekennzeichnet, dass** das wenigstens eine verformbare mechanische Element (130) wenigstens einen Arm umfasst, der sich entlang wenigstens einer Achse parallel zum Wellenleiter erstreckt.

4. Optomechanischer Resonator (100; 800; 900) nach Anspruch 3, **dadurch gekennzeichnet, dass** das wenigstens eine verformbare mechanische Element zwei Arme (130) umfasst, die den hängenden Bereich seitlich einrahmen.

5. Optomechanischer Resonator nach Anspruch 3, **dadurch gekennzeichnet, dass** das wenigstens eine verformbare mechanische Element wenigstens zwei Reihen von Abschnitten umfasst und dass in jeder Reihe die Abschnitte (131, 132, 133; 131', 132') entlang einer Achse parallel zum Wellenleiter verteilt und wenigstens durch einen mit Gas oder Vakuum gefüllten Spalt paarweise getrennt sind.

6. Optomechanischer Resonator (700) nach Anspruch 3, **dadurch gekennzeichnet, dass** das wenigstens eine verformbare mechanische Element eine verformbare Membran (730) umfasst, die eine Stütze für den hängenden Bereich bildet.

7. Optomechanischer Resonator (100; 700; 800; 900) nach einem der Ansprüche 1 bis 6, **dadurch gekennzeichnet, dass** die Spiegel (120) Bragg-Spiegel sind.

8. Optomechanischer Resonator (100; 700; 800; 900) nach Anspruch 7, **dadurch gekennzeichnet, dass** jeder der Bragg-Spiegel (120) eine Vielzahl von zweiten Stäben (122) aufweist, die jeweils aus dem gleichen Material wie die ersten Stäbe (111) des Wellenleiters bestehen.

9. Optomechanischer Resonator (100; 700; 900) nach Anspruch 7 oder 8, **dadurch gekennzeichnet, dass** wenigstens ein Teil wenigstens eines der Bragg-Spiegel (120) Teil des hängenden Bereichs ist.

10. Optomechanischer Resonator (100; 700; 800; 900) nach einem der Ansprüche 1 bis 9, **dadurch gekennzeichnet, dass** die ersten Stäbe (111) des Wellenleiters nacheinander mit einem Verteilungsabstand $\Lambda$ verteilt sind, so dass:

$$\Lambda < \frac{\lambda_0}{2 n_h}$$

wobei $\lambda_0$ die zentrale Wellenlänge des Führungswellenlängenbereichs des Wellenleiters ist; und
$n_h$ der mittlere Brechungsindex der ersten Stäbe (111) ist.

11. System (10), umfassend wenigstens zwei optomechanische Resonatoren (100, 100'), wobei:

- jeder optomechanische Resonator (100, 100') einen optisch resonanten Hohlraum umfasst, der durch einen Wellenleiter (110) gebildet ist, der zwischen zwei Spiegeln angeordnet ist, wobei der Wellenleiter eine Vielzahl von ersten Stäben (111) umfasst, die zueinander beabstandet sind;
- wenigstens einer der optomechanischen Resonatoren (100, 100') einen optomechanischen Resonator nach einem der Ansprüche 1 bis 10 bildet; und
- optomechanische Resonatoren (100, 100') durch gedämpfte Kopplung paarweise optisch gekoppelt sind.

12. Messvorrichtung (5000), umfassend wenigstens einen optomechanischen Resonator (100) nach einem der Ansprüche 1 bis 10 und wenigstens einen optischen Sensor (50), wobei der optische Sensor (50) derart angeordnet ist, dass er einen Lichtstrahl ($F_{out}$) empfängt, der aus dem optomechanischen Resonator austritt, nachdem er dort mehrere Male hin und her gelaufen ist, und eine zeitliche Fluktuation einer physikalischen Eigenschaft des Lichtstrahls messen kann.

**Claims**

1. Opto-mechanical resonator (100; 700; 800; 900) comprising a waveguide (110) formed by a plurality of first strips (111) spaced apart from one another, **characterised in that**:

- the opto-mechanical resonator comprises at least two mirrors (120) disposed facing one another, which mirrors are optically reflective over at least part of a guide wavelength range of the waveguide;
- the waveguide (110) extends between the two mirrors (120), and forms therewith an optically resonant cavity (160); and
- a so-called suspended region, comprising at least part of the waveguide (110), is held such that it is suspended over a substrate (140) by at least one deformable mechanical element (130; 730).

2. Opto-mechanical resonator (100; 700; 800; 900) according to claim 1, **characterised in that** the deformable mechanical element (130; 730) is fixed relative to the substrate (140), at least at one of the ends thereof along an axis parallel to the waveguide.

3. Opto-mechanical resonator (100; 800; 900) according to claim 1 or 2, **characterised in that** the at least one deformable mechanical element (130) comprises at least one arm, which extends along at least one axis parallel to the waveguide.

4. Opto-mechanical resonator (100; 800; 900) according to claim 3, **characterised in that** the at least one deformable mechanical element comprises two arms (130), laterally framing the suspended region.

5. Opto-mechanical resonator according to claim 3, **characterised in that** the at least one deformable mechanical element comprises at least two series of segments, and **in that**, in each series, the segments (131, 132, 133; 131', 132') are distributed along an axis parallel to the waveguide and separated, in pairs, at least by a gap filled with a gas or a vacuum.

6. Opto-mechanical resonator (700) according to claim 3, **characterised in that** the at least one deformable mechanical element comprises a deformable membrane (730), forming a support for the suspended region.

7. Opto-mechanical resonator (100; 700; 800; 900) according to any of claims 1 to 6, **characterised in that** said mirrors (120) are Bragg mirrors.

8. Opto-mechanical resonator (100; 700; 800; 900) according to claim 7, **characterised in that** each of said Bragg mirrors (120) comprises a plurality of second strips (122), each of which is made of the same material as the first strips (111) of the waveguide.

9. Opto-mechanical resonator (100; 700; 900) according to claim 7 or 8, **characterised in that** at least part of at least one of said Bragg mirrors (120) forms a part of the suspended region.

10. Opto-mechanical resonator (100; 700; 800; 900) according to any of claims 1 to 9, **characterised in that** the first strips (111) of the waveguide are distributed one after another according to a distribution pitch A such that:

$$\Lambda < \frac{\lambda_0}{2n_h}$$

where $\lambda_0$ is the central wavelength of the guide wavelength range of the waveguide; and $n_h$ is the average refractive index of the first strips (111).

11. System (10) including at least two opto-mechanical resonators (100, 100'), wherein:

- each opto-mechanical resonator (100, 100') comprises an optically resonant cavity, formed by a waveguide (110) arranged between two mirrors, with the waveguide comprising a plurality of first strips (111) spaced apart from one another;
- at least one of said opto-mechanical resonators (100, 100') forms an opto-mechanical resonator according to any of claims 1 to 10; and
- the opto-mechanical resonators (100, 100') are optically coupled in pairs by evanescent coupling.

12. Measuring device (5000) including at least one opto-mechanical resonator (100) according to any of claims 1 to 10 and at least one optical sensor (50), the optical sensor (50) being arranged so as to receive a light beam ($F_{out}$) emerging from the opto-mechanical resonator after having undergone a plurality of forward-return movements therein, and being capable of measuring a fluctuation, as a function of time, of a physical property of said light beam.

100

120  110 111  112  130

x

y

130                          120 121 122

## FIG.1A

100

120        110        120

}150

z

x

140

141

## FIG.1B

100

160

120

110        120

181

182

120

z

x

y

## FIG.1C

FIG.2

FIG.3A

FIG.3B

$L_0$

FIG.4A

$L_0 + \tilde{x}$

FIG.4B

FIG.5

FIG.6A

FIG.6B

FIG.7

FIG.8

FIG.9

FIG.10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3068778 A1
- FR 20170056293

- US 10031158 B

**Littérature non-brevet citée dans la description**

- **NATHAN C. LINDQUIST.** Periodic Modulation of Extraordinary Optical Transmission through Subwavelength Hole Arrays using surrounding Bragg Mirrors. *Phys. Rev. B,* vol. 76, 155106